# EUROPEAN PATENT SPECIFICATION

(11) **EP 3 450 524 B1**
(45) Date of publication and mention of the grant of the patent: **03.06.2020**
(21) Application number: 18190064.8
(22) Date of filing: 21.08.2018
(51) Int. Cl.: C10G 7/00, C10G 7/06, C10G 3/00, C10G 1/06

(54) **METHOD FOR CONVERTING A CONVENTIONAL OIL, PETROCHEMICAL OR CHEMICAL PLANT INTO A BIOREFINERY**
VERFAHREN ZUR UMWANDLUNG EINER KONVENTIONELLEN ÖL-, PETROCHEMISCHEN ODER CHEMISCHEN ANLAGE IN EINE BIORAFFINERIE
PROCÉDÉ POUR CONVERTIR UNE USINE D'HUILE CLASSIQUE, PÉTROCHIMIQUE OU CHIMIQUE EN BIORAFFINERIE

(30) Priority: 01.09.2017 IT 201700098243
(43) Date of publication of application: 06.03.2019
(73) Proprietor: Water And Soil Remediation S.r.l., 46010 Curtatone, Frazione Levata MN (IT)
(72) Inventor: PRANDI, Alberto, 46100 MANTOVA (IT)
(74) Representative: Modiano, Micaela Nadia

(56) References cited:
- WO-A1-2014/033762
- Group Tepe4: "Co-processing Bio-crude at Petroleum Refineries Fractional Distillation and Deoxygenation of HTL Bio-crude to Evaluate the Potential as Co-processing Feed", , 3 June 2014 (2014-06-03), XP055465309, Retrieved from the Internet: URL:http://projekter.aau.dk/projekter/file s/198489791/Co_processing_Bio_crude_at_Pet roleum_Refineries.pdf [retrieved on 2018-04-06]
- Eni: "Green Refinery: reinventing petroleum refineries", , 23 May 2014 (2014-05-23), XP055465315, Retrieved from the Internet: URL:https://www.eni.com/docs/en_IT/enicom/ publications-archive/company/operations-st rategies/refining-marketing/eni_Green-Refi nery_esecutivo.pdf [retrieved on 2018-04-06]

## Description

The present invention relates to a method for converting a conventional oil, petrochemical or chemical plant into a biorefinery.

More particularly, the invention relates to a method for converting a conventional oil, petrochemical or chemical plant, such as an oil refinery, a petrochemical or chemical facility, into a biorefinery of lignocellulosic materials.

As known, conventional oil refineries allow to separate from the crude oil various components which are subsequently processed in order to obtain various types of products. The separation of the various components of the crude oil is, as known, performed by means of distillation or fractionation processes, which normally can be of two kinds: atmospheric distillation or topping and vacuum distillation.

In particular, atmospheric distillation or topping distillation is performed in distillation units that comprise distillation columns or towers constituted by a cylindrical tank with a vertical axis which accommodates internally a plurality of separation plates, which are mutually regularly spaced along the vertical extension of the tank and are crossed in succession by the crude oil that is loaded, in the form of vapor, in the bottom of the tank and is made to rise along the distillation column, so that the less volatile compounds of the crude oil, by condensing at the separation plates, can be collected in the liquid phase at the bottom of the tank, while the more volatile ones, continuing in their rise, can be extracted, again in the vapor phase, in the upper part of the column.

In order to be able to extract compounds having a very high boiling point at atmospheric pressure, vacuum distillation is used instead; it is performed in a distillation column that is constructively similar to the one used for atmospheric distillation but with the difference that a pressure lower than atmospheric pressure is maintained inside it by means of a vacuum pump.

The distillation products can be subjected in the refinery to additional treatments, such as cracking, which allows to break down the molecules of the heavy hydrocarbons obtained in vacuum distillation, reforming, which allows to increase the octane number of the fuels being processed, visbreaking, which consists in the thermal breakdown of the residual oils that originate from atmospheric or vacuum distillation, and others.

Currently, a significant and growing overcapacity of oil refineries and of petrochemical facilities is being observed.

Generally, when oil and petrochemical facilities are decommissioned, they are abandoned or even dismantled, without reusing the existing infrastructures for other production activities, with the obvious drawbacks of environmental impact as well as purely economic ones.

In order to attempt to solve these drawbacks, methods for converting conventional refineries into biorefineries, such as the ones disclosed in WO2014033762A1 and WO2015181279A1, have been proposed.

According to these methods, starting from a conventional refinery, one obtains a biorefinery that reuses and extends some existing plants in order to convert palm oil into biodiesel.

In particular, WO2014033762A1 discloses a method for converting a refinery that provides a system containing two hydrodesulfurization units in a biorefinery that comprises a unit for the production of hydrocarbon fractions from mixtures of biological origin containing fatty acid esters by means of their dehydroxygenation and isomerization.

WO2015181279A1 instead discloses a method for converting a refinery which has a system containing two hydrodesulfurization units into a biorefinery that comprises a unit for the production of hydrocarbon fractions from mixtures of fatty acid esters of biological origin, by hydrolysis, hydrodeoxygenation, and isomerization.

One limitation of the methods proposed in the above cited patent applications is that they only allow the conversion of conventional refineries provided with two hydrodesulfurization units, which does not always occur in existing refineries.

Group Tepe4, Master Thesis: "Co-processing Bio-crude at Petroleum Refineries Fractional Distillation and Deoxygenation of HTL Bio-crude to Evaluate the Potential as Co-processing Feed", 3 June 2014, from Aalborg University, discloses a method for converting a conventional refinery into a biorefinery.

As is also known, biorefineries are currently available which are capable of processing lignocellulosic biomasses and other residual biomasses, so-called second- and third-generation biomasses, which are notoriously difficult to pretreat, with respect to first-generation ones, such as for example starches. The expression "second- and third-generation biorefining" is understood to reference biorefining reserved to materials that fully comply with environmental and social sustainability, especially because they are not derived from soil taken away from farming. In particular, second- and third-generation biorefining provides for the use as raw materials of residual biomasses, such as waste lignocellulosic masses, agroalimentary residues, spontaneous vegetation, organic fractions from municipal waste, and so forth.

In current biorefineries it is known to use treatments known as "steam explosion", which allow the separation of the components of the lignocellulosic biomasses and consist in practice in the release at atmospheric pressure of a mixture of biomass and steam at approximately 200°C and approximately 20 bar, in a vessel known as "explosion vessel" or "flash vessel".

The aim of the present invention is to provide a method for converting an oil, petrochemical or chemical plant into a biorefinery that is capable of improving the background art in one or more of the aspects indicated above.

Within this aim, an object of the invention is to provide a method that allows to convert into a biorefinery any kind of conventional refinery or petrochemical plant even if it lacks two hydrodesulfurization units. The method of the invention is defined in the appended claims.

Another object of the invention is to provide a method for the conversion of a conventional oil, petrochemical or chemical plant, such as for example an oil refinery or a petrochemical or chemical facility of the traditional type or the like, into a biorefinery that is capable of treating lignocellulosic biomasses and other so-called second- and third-generation residual biomasses.

Another object of the present invention is to provide a method for converting a conventional oil, petrochemical or chemical plant, such as an oil refinery, a petrochemical or chemical facility or the like, into a biorefinery that has a multipurpose flexibility in supplies, ensuring the possibility of partial or total replacement of one raw material in favor of another one to compensate for any criticalities in availability, market and/or price of one or more of the various biomasses in input to the biorefinery.

Another object of the present invention is to provide a method for converting conventional oil refineries, petrochemical or chemical facilities into biorefineries that has a conversion cost that is competitive with respect to other conversion methods or even to the construction of a new biorefinery.

A still further object of the present invention is to overcome the drawbacks of the background art in a manner that is alternative to any existing solutions.

This aim, as well as these and other objects which will become better apparent hereinafter are achieved by a method for converting a conventional oil, petrochemical or chemical plant into a biorefinery according to claim 1, optionally provided with one or more of the characteristics of the dependent claims.

Further characteristics and advantages of the invention will become better apparent from the description of some preferred but not exclusive embodiments of the method according to the invention, illustrated by way of nonlimiting example with the aid of the accompanying drawings, wherein:
Figure 1 is a schematic view of a unit for the execution of a steam explosion process on biomasses, obtained with the method according to the invention;
Figure 2 is a schematic view of a unit for the execution of a vacuum flash process on biomasses, obtained with the method according to the invention.

With reference to the figures, the method for converting a conventional oil, petrochemical or chemical plant, such as an oil refinery or a petrochemical or chemical facility, into a biorefinery, according to the invention, finds a special application in the very frequent cases in which the oil, petrochemical or chemical plant to be converted comprises at least one distillation unit.

In particular, the method according to the invention provides for reuse, within the biorefinery, of an existing distillation unit of the oil, petrochemical or chemical plant to be converted in order to perform the pretreatment of the biomasses fed to the biorefinery.

More particularly, the existing distillation unit is reused in the biorefinery in order to perform, in lignocellulosic biomasses in input to the biorefinery itself, a process of sudden expansion in order to achieve the rupture of the lignin casings and achieve the consequent release of the celluloses for enzyme hydrolysis.

The reused distillation unit comprises a distillation column provided with a tank 1.

In practice, the process of sudden expansion to which the biomass is subjected in the biorefinery can consist of a steam explosion process, which according to the background art provides for the release at atmospheric pressure of a mixture of biomass and steam at approximately 200°C and approximately 20 bar in a vessel known as explosion vessel or flash vessel.

The method according to the invention provides, instead of the installation of a new explosion or flash vessel, for the reuse of the tank 1 of an existing distillation column of the plant to be converted in order to perform the sudden expansion of the biomasses in input to the resulting biorefinery.

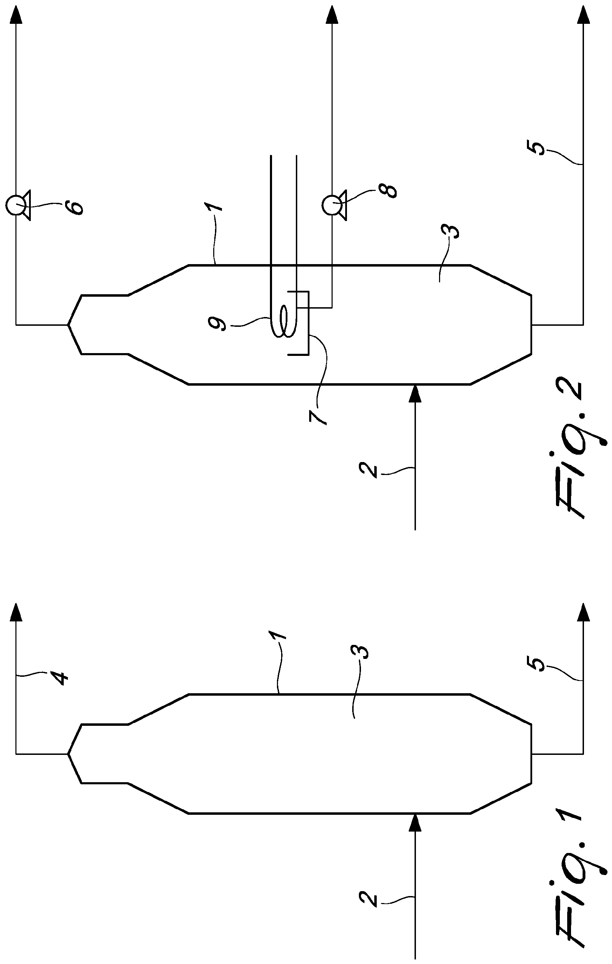

With reference to Figure 1, a situation is shown which represents one of the most common steam explosion processes, in which the tank 1 of an existing distillation column can receive a mixture of biomass and steam from a supply line 2, which is connected to an inlet of the distillation column, and allow flashing, i.e., the sudden expansion of said mixture, inside it, at an expansion or flash region 3 which can be identified inside the tank 1. The gaseous effluents, especially water vapor at a substantially atmospheric pressure, produced as a consequence of the steam explosion process, exit from the upper part of the tank 1 of the distillation column through an output line 4 connected to an upper outlet of the distillation column, while the exploded biomass exits from the bottom of the distillation column, through a discharge line 5 that is connected to a lower outlet of the distillation column.

With reference to Figure 2, a situation is shown which represents a vacuum flash process, in which the pre-existing distillation column, provided for example with one or more condensate collection devices 7, connected to a respective extraction pump 8, and with heat exchangers 9, is reused so as to receive in its tank 1, through the supply line 2, a mixture formed by biomass and water that is preheated and under pressure, so as to obtain flashing inside it, at the flash region generally designated by the reference numeral 3, at a pressure that is lower than atmospheric pressure. In this case, vacuum is created in the tank 1 by condensation of the water vapor generated in the flash, at a temperature that can vary as a function of the desired absolute pressure. The remaining part of the gases, which are in practice noncondensable, is extracted by an adapted vacuum pump 6.

In this case also, the exploded biomass is extracted from a discharge line 5 which is connected to the bottom of the tank 1 of the reused distillation column.

One deduces from what has been described above that the same distillation column can be reused, depending on the requirements, by subjecting it to different operating conditions, as a function of the type of biomass used in input as raw material.

Conveniently, if the conventional oil refinery, petrochemical or chemical facility to be converted has at least two distillation units, the method according to the invention provides for reusing at least one of the pre-existing distillation units and in particular at least one of its distillation columns for the pretreatment of the raw materials and at least one other one of the pre-existing distillation units and more particularly at least one of the corresponding distillation columns to distill the finished product of the obtained biorefinery.

It should be noted that both the pretreatment step and the distillation step constitute, in traditional biorefineries, the steps that entail the greatest capital investment, and therefore the method according to the invention allows considerable economic saving by reusing existing structures such as distillation units.

It should also be noted that with the conversion method according to the invention it is essentially possible to reuse conventional oil refineries, petrochemical or chemical facilities that are no longer in use, converting them into second- and third-generation integrated and multiproduct biorefineries by virtue of the fact of providing: the reuse of existing atmospheric and/or vacuum distillation units, comprising the associated exchangers, pumps, vessels and any other accessories, in order to perform, in the resulting biorefinery, the pretreatment of the biomasses and optionally the distillation of the finished products; the use in the obtained biorefinery of processes that to a large extent are based on natural catalysis, typically biological and enzyme-based catalysis; the execution in the biorefinery of a plurality of production processes and their integration in the processing plans; the reuse of the carbon dioxide generated in fermentation processes in order to self-produce biomasses with high intensity.

In greater detail, with the proposed method, plant portions of the previous facility or refinery are used in the obtained biorefinery for the pretreatment of biomasses, are constituted by one or more distillation units and comprise, more particularly, distillation columns with any corresponding exchangers, vessels, pumps, valves and monitoring instruments for levels, flow rates and temperatures, firefighting systems, sewage system, water system, and so forth. Structural modifications to the existing plant portion that is reused according to the proposed method are not necessary, since the main structures can be reused practically as they are.

The use, in the biorefinery obtained with the method according to the invention, of processes that to a large extent natural are based on catalysis, typically biological and enzyme-based catalysis, is in practice achieved for example by means of the considerable degree of expansion, known in the jargon as "flash" or "explosion", which increases as the absolute pressure inside the column decreases, facilitating the reuse of existing storage tanks of the oil, petrochemical or chemical plant to be converted as containers inside which the biochemical reactions are to be provided, said reactions being notoriously slow and therefore requiring long retention times.

Advantageously, the catalysis processes used in the obtained biorefinery are performed at low temperatures and pressures, so as to have an extremely low impact in terms of risk for safety, health and the environment.

The execution of a plurality of production processes and their integration in the processing plans allows conveniently to give the obtained biorefinery flexibility with respect to supplies and to improve the value of raw materials, and is made possible by providing flexibility in terms of reaction times and absolute operating pressures and temperatures pressures of the flash region provided in the reused distillation columns according to the proposed method in order to perform steam explosion processes in the obtained biorefinery.

The reuse of the carbon dioxide generated in fermentation processes in order to self-produce biomasses with high intensity advantageously consists in creating atmospheres rich in carbon dioxide, in which some plants can proliferate at rates that are proportional to its concentration.

In particular, the carbon dioxide produced in large quantities as a byproduct of the fermentations of lignocellulosic materials is utilized to simulate chlorophyll photosyntheses and thus generate new third-generation biomasses.

From what has been described above it is understood that the method according to the invention allows to convert oil refineries or petrochemical or chemical facilities, obtaining a biorefinery that can operate with various types of raw material biomasses, also by virtue of the fact that it is capable of pretreating them by reusing elements and portions of the existing plant, as distillation units, usable in different operating conditions.

Another advantageous aspect of the invention is to allow the provision of biorefineries in which first-generation biomasses are not used, but so-called second-generation residual biomasses are used in addition to the self-produced ones, i.e., the third-generation ones. It is in fact indeed the pretreatment of the lignocellulosic biomasses, achieved by virtue of the intended reuse of existing distillation units, that allows the biorefining of second- and third-generation biomasses.

More particularly, the raw materials that can be processed in the biorefinery obtained with the method according to the invention comprise a plurality of biomasses which are mutually different (hay of various origins, prunings and wood of various origins, waste paper and cardboard, etc.) in terms of origin, production process, workability and obtainable yields, but in any case all belonging to waste materials or byproducts of other processes (second- and third-generation).

The plurality of types of raw material that can be processed by the biorefinery obtained with the method according to the invention and the consequent plurality of processes used by the latter give the biorefinery a multipurpose flexibility in supplies, ensuring the possibility of partial or total replacement of one raw material in favor of another to compensate for any criticalities in availability, market and/or price of one or more of the various biomasses. This flexibility is not easily present in biorefineries of the conventional type.

Another advantageous aspect is that the conversion method according to the invention, by reusing part of the infrastructures of the existing facility, thus allows to save a large portion, estimated at around 80%, of the investment cost with respect to building the biorefinery from scratch, with the additional advantage that the production capacity of the biorefinery obtained with the proposed conversion method can be high, benefiting from the typically large size of the pre-existing distillation units.

The invention thus conceived is susceptible of numerous modifications and variations, all of which are within the scope of the appended claims; all the details may further be replaced with other technically equivalent elements.

In practice, the materials used, so long as they are compatible with the specific use, as well as the contingent shapes and dimensions, may be any according to the requirements and the state of the art.

The disclosures in Italian Patent Application No. 102017000098243 from which this application claims priority are hereby mentioned.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. A method for converting a conventional oil, petrochemical or chemical plant, comprising at least one distillation unit, into a biorefinery, **characterized in that** it provides for the reuse of said at least one distillation unit to perform at least one pretreatment of a lignocellulosic biomass in input to the biorefinery including a process of sudden expansion of the lignocellulosic biomass in order to achieve the rupture of the lignin casings and achieve the consequent release of the celluloses for enzyme hydrolysis.

2. The method according to claim 1, for converting a conventional oil, petrochemical or chemical plant, **characterized in that** it comprises at least two distillation units, into a biorefinery, and providing for the reuse of a first one of said at least two distillation units to perform said pretreatment of the lignocellulosic biomass in input to the biorefinery and for the reuse of a second one of said at least two distillation units to perform the distillation of at least one part of the finished products in output.

3. The method according to one or more of the preceding claims, **characterized in that** said at least one distillation unit is reused as it is.

4. The method according to one or more of the preceding claims, **characterized in that** the reuse of said at least one distillation unit provides for the connection, to an inlet of at least one distillation column of said at least one distillation unit, of a line (2) for supplying a mixture composed of lignocellulosic biomass and steam or preheated water under pressure.

5. The method according to one or more of the preceding claims 1-3, **characterized in that** the reuse of said at least one distillation unit provides for connecting a lower outlet of said distillation column to a line for the discharge of the treated lignocellulosic biomass and an upper outlet to a line (4) for the outflow of gaseous effluents or to a vacuum pump (6).

6. The method according to one or more of the preceding claims, **characterized in that** said at least one reused distillation unit comprises at least one pre-existing apparatus chosen in the group comprising apparatuses for atmospheric distillation, topping, vacuum, visbreaking, cracking, reforming.

7. The method according to one or more of the preceding claims, **characterized in that** said at least one distillation unit is reused to perform on the lignocellulosic biomasses in input to the biorefinery at least one pretreatment at atmospheric pressure, according to a process of the steam explosion type, and/or at least one pretreatment at a pressure that is lower than atmospheric pressure, according to a process of the vacuum flash type.

8. The method according to one or more of the preceding claims, **characterized in that** it provides for the reuse also of storage tanks and other structures, optionally subjected to modifications, as a function of their new intended use.

## Patentansprüche

1. Ein Verfahren zur Umwandlung einer konventionellen Öl-, petrochemischen oder chemischen Anlage, die mindestens eine Destilliereinheit umfasst, in eine Bioraffinerie, **dadurch gekennzeichnet, dass** es die Wiederverwendung der mindestens einen Destilliereinheit ermöglicht, um mindestens eine Vorbehandlung einer Lignocellulose-Biomasse durchzuführen, die in die Bioraffinerie eingetragen wird, einschließlich eines Prozesses der plötzlichen Expansion der Lignocellulose-Biomasse, um den Bruch der Lignin-Behälter und die daraus folgende Freisetzung der Cellulosen zur Enzym-Hydrolyse zu erzielen.

2. Das Verfahren gemäß Anspruch 1 zur Umwandlung einer konventionellen Öl-, petrochemischen oder chemischen Anlage, die **dadurch gekennzeichnet ist, dass** sie mindestens zwei Destilliereinheiten umfasst, in eine Bioraffinerie; und zum Ermöglichen der Wiederverwendung einer ersten der mindestens zwei Destilliereinheiten, um die Vorbehandlung der Lignocellulose-Biomasse durchzuführen, die in die Bioraffinerie eingetragen wird; und der Wiederverwendung einer zweiten der mindestens zwei Destilliereinheiten, um die Destillation mindestens eines Teils der Fertigprodukte durchzuführen, die abgegeben werden.

3. Das Verfahren gemäß einem oder mehreren der obigen Ansprüche, **dadurch gekennzeichnet, dass** die mindestens eine Destilliereinheit so wiederverwendet wird, wie sie ist.

4. Das Verfahren gemäß einem oder mehreren der obigen Ansprüche, **dadurch gekennzeichnet, dass** die Wiederverwendung der mindestens einen Destilliereinheit die Verbindung einer Leitung (2) zum Zuführen einer Mischung, die aus Lignocellulose-Biomasse und Dampf oder vorerhitztem Wasser unter Druck besteht, mit einem Einlass mindestens einer Destillierkolonne der mindestens einen Destilliereinheit ermöglicht.

5. Das Verfahren gemäß einem oder mehreren der obigen Ansprüche 1-3, **dadurch gekennzeichnet, dass** die Wiederverwendung der mindestens einen Destilliereinheit die Verbindung eines unteren Auslasses der Destillierkolonne mit einer Leitung zum Ablassen der behandelten Lignocellulose-Biomasse und eines oberen Auslasses mit einer Leitung (4) zum Ausströmen gasförmiger Abflüsse oder mit einer Vakuumpumpe (6) ermöglicht.

6. Das Verfahren gemäß einem oder mehreren der obigen Ansprüche, **dadurch gekennzeichnet, dass** die mindestens eine wiederverwendete Destilliereinheit mindestens eine bereits vorhandene Apparatur umfasst, gewählt aus der Gruppe, die Apparaturen zur atmosphärischen Destillation, Toppung, Vakuum, Visbreaking, Kracken, Reformierung umfasst.

7. Das Verfahren gemäß einem oder mehreren der obigen Ansprüche, **dadurch gekennzeichnet, dass** die mindestens eine Destilliereinheit wiederverwendet wird, um an den Lignocellulose-Biomassen, die in die Bioraffinerie eingetragen werden, mindestens eine Vorbehandlung bei atmosphärischem Druck, in einem Verfahren vom Dampfexplosionstyp, und/oder mindestens eine Vorbehandlung bei einem Druck unterhalb von atmosphärischem Druck, in einem Verfahren vom Vakuumkühlertyp, durchzuführen.

8. Das Verfahren gemäß einem oder mehreren der obigen Ansprüche, **dadurch gekennzeichnet, dass** es auch die Wiederverwendung von Speichertanks und anderen Strukturen, wahlweise mit Modifikationen, je nach ihrem neuen Einsatzbereich, ermöglicht.

## Revendications

1. Procédé de conversion d'une installation pétrolière, pétrochimique ou chimique classique, comprenant au moins une unité de distillation, en une bioraffinerie, **caractérisé en ce que** l'on prévoit de réemployer ladite unité de distillation, au nombre d'au moins une, pour réaliser au moins un prétraitement d'une biomasse lignocellulosique en entrée de bioraffinerie, y compris une opération de brusque expansion de la biomasse lignocellulosique visant à réaliser la rupture des gaines de lignine et par conséquent la libération des celluloses en vue d'une hydrolyse enzymatique.

2. Procédé, conforme à la revendication 1, de conversion en une bioraffinerie d'une installation pétrolière, pétrochimique ou chimique classique, **caractérisé en ce que** celle-ci comporte au moins deux unités de distillation et **en ce que** l'on prévoit de réemployer une première de ces unités de distillation au nombre d'au moins deux pour réaliser ledit prétraitement de la biomasse lignocellulosique en entrée de bioraffinerie, et de réemployer une deuxième de ces unités de distillation au nombre d'au moins deux pour réaliser la distillation d'au moins une partie des produits finis en sortie.

3. Procédé conforme à l'une ou plusieurs des revendications précédentes, **caractérisé en ce que** ladite unité de distillation au nombre d'au moins une est réemployée telle quelle.

4. Procédé conforme à l'une ou plusieurs des revendications précédentes, **caractérisé en ce que**, pour réemployer ladite unité de distillation au nombre d'au moins une, on prévoit de raccorder, à une entrée d'au moins une colonne de distillation de ladite unité de distillation au nombre d'au moins une, une conduite (2) pour y amener un mélange composé de biomasse lignocellulosique et de vapeur d'eau ou d'eau préchauffée sous pression.

5. Procédé conforme à l'une ou plusieurs des revendications 1 à 3 précédentes, **caractérisé en ce que**, pour réemployer ladite unité de distillation au nombre d'au moins une, on prévoit de raccorder une sortie inférieure de ladite colonne de distillation à une conduite servant à décharger la biomasse lignocellulosique traitée, et une sortie supérieure à une conduite (4) servant à évacuer les effluents gazeux ou menant à une pompe à vide (6).

6. Procédé conforme à l'une ou plusieurs des revendications précédentes, **caractérisé en ce que** ladite unité de distillation réemployée, au nombre d'au moins une, comprend au moins un appareillage préexistant, choisi dans l'ensemble comprenant les appareillages servant à une distillation sous pression atmosphérique ou « topping », à une distillation sous vide, à une viscoréduction, à un craquage ou à un reformage.

7. Procédé conforme à l'une ou plusieurs des revendications précédentes, **caractérisé en ce que** l'on réemploie ladite unité de distillation au nombre d'au moins une pour réaliser, sur une biomasse lignocellulosique en entrée de bioraffinerie, au moins un prétraitement sous pression atmosphérique, selon un procédé du type explosion de vapeur d'eau, et/ou au moins un prétraitement sous une pression inférieure à la pression atmosphérique, selon un procédé du type vaporisation éclair sous vide.

8. Procédé conforme à l'une ou plusieurs des revendications précédentes, **caractérisé en ce que** l'on prévoit également le réemploi de cuves de stockage et d'autres structures, éventuellement après les avoir modifiées en fonction de leur nouvelle utilisation envisagée.
